# EUROPEAN PATENT APPLICATION

(11) **EP 3 855 343 A1**
(43) Date of publication of application: **28.07.2021**
(21) Application number: 18934444.3
(22) Date of filing: 23.11.2018
(51) Int. Cl.: G06K 9/00, G06Q 30/02

(54) **CUSTOMER VISIT ANALYSIS METHOD AND APPARATUS, AND STORAGE MEDIUM**

(30) Priority: 18.09.2018 CN 201811093386
(71) Applicant: Tupu Technology (Guangzhou) Co., Ltd., Guangdong 510000 (CN)
(72) Inventor: LIU, Zexu, Guangzhou, Guangdong 510000 (CN)
(74) Representative: Pons
(86) International application number: PCT/CN2018/117286
(87) International publication number: WO 2020/056915

(57) **Abstract**

Provided are a customer visit analysis method and apparatus, and a storage medium. The customer visit analysis method comprises: acquiring face recognition result data of customers in a store; clustering the face recognition result data of the customers in the store according to the IDs of the customers and determining arrival time and departure time for each behavior of arriving at the store. According to the customer visit analysis method provided by the present disclosure, the visit information of each customer can be analyzed by means of a face recognition result, wherein the visit information comprises the arrival time and the departure time of the customer.

## Description

### Cross-Reference to Related Applications

The present disclosure claims priority to Chinese Patent Application No. CN201811093386X, filed with the Chinese Patent Office on September 18, 2018, entitled "Customer Visit Analysis Method and Apparatus, and Storage Medium", which is incorporated herein by reference in its entirety.

### Technical Field

The present disclosure relates to the field of data analysis and processing technologies, and in particular to a customer visit analysis method, a customer visit analysis apparatus, and a storage medium.

### Background Art

With the increasing development of artificial intelligence, there is little difference between the accuracies of recognition of human faces by machines and by humans, and there are more and more applications based on face recognition. In a commercially intelligent scenario, each visitor photographed by a camera can basically be correctly identified based on a face recognition technology, but no effective solution has been proposed at this stage regarding how to accurately analyze visit records of each visitor according to the faces of these identified visitors.

### Summary

The present disclosure provides a customer visit analysis method, a customer visit analysis apparatus, and a storage medium.

A first aspect of the present disclosure provides a customer visit analysis method, comprising:
acquiring face recognition result data of customers in a store, wherein the face recognition result data includes IDs of the customers and time periods during which the customers are photographed;
clustering the face recognition result data of the customers in the store according to the IDs of the customers to obtain at least one time period which corresponds to the ID of each customer and during which the customer is photographed;
if the ID of a customer corresponds to a plurality of time periods during which the customer is photographed, judging whether a time difference between two adjacent time periods among the plurality of time periods during which the customer is photographed is not greater than a staying duration threshold;
if not greater, determining that the two adjacent time periods correspond to the same visit to the store; and
determining arrival time and departure time for each visit to the store. In the present disclosure, the time period may be understood as a time stamp.

Optionally, before the acquiring face recognition result data of customers in a store, the method further includes: clustering face recognition result data of all customers according to stores, to obtain face recognition result data of customers in each store.

Optionally, before clustering face recognition result data of all customers according to stores, the method further includes:
packaging face recognition result data transmitted from an upper-layer service and sending the face recognition result data to a message queue; and
reading and processing the face recognition result data from the message queue.

Optionally, the packaging face recognition result data transmitted from an upper-layer service and sending the face recognition result data to a message queue includes:
preprocessing face recognition result data after acquiring the face recognition result data transmitted from an upper-layer service, the preprocessing including completing data verification, sorting data structures, and compressing data; and
packaging and sending the preprocessed face recognition result data to a message queue.

The reading and processing the face recognition result data from the message queue includes: decompressing the face recognition result data and sorting data structures; and
saving the processed face recognition result data into a time series database according to a preset saving rule.

Optionally, the judging whether a time difference between two adjacent time periods among the plurality of time periods during which the customer is photographed is not greater than a staying duration threshold includes:
dividing each day into a plurality of consecutive preset time periods and mapping each of the time periods which correspond to the ID of each customer and during which the customer is photographed to the plurality of consecutive preset time periods;
determining the minimum time point and the maximum time point corresponding to the ID of the customer in each preset time period; and
judging whether a difference between the minimum time point in a later preset time period and the maximum time point in an earlier preset time period of two adjacent preset time periods, among the preset time periods to which the time periods during which the customer is photographed are mapped, is not greater than the staying duration threshold.

Optionally, the dividing each day into a plurality of consecutive preset time periods and mapping each of the time periods which correspond to the ID of each customer and during which the customer is photographed to the plurality of consecutive preset time periods includes:
projecting, into the consecutive preset time periods, consecutive time points in each of time periods which correspond to the ID of the same customer and during which the customer is photographed, wherein the length of a time interval between two adjacent preset time periods among the plurality of consecutive preset time periods is equal to the staying duration threshold.

Optionally, the method further includes, after the determination of arrival time and departure time for each visit to the store, determining a staying duration for each visit of the ID of each customer to the store.

Optionally, the face recognition result data includes a date. The method further includes, after the determination of arrival time and departure time for each visit to the store,
determining the number of visits and a total staying duration corresponding to the ID of each customer on the date.

Optionally, the face recognition result data further includes a photographing area where the customer is photographed. The method further includes:
integrating and saving at least one of the arrival time, the departure time, the staying duration, the total staying duration, and the number of visits corresponding to the ID of each customer into a database according to a preset saving condition, the preset saving condition including a store and/or a photographing area.

Optionally, the acquiring face recognition result data of customers in a store includes:
when real-time face recognition result data is being transmitted, judging whether facial data corresponding to the face recognition result data is the same as pre-stored facial data of an employee;
if the facial data corresponding to the face recognition result data is the same as the pre-stored facial data of an employee, determining that the face recognition result data corresponds to face recognition result data of the employee;
if the facial data corresponding to the face recognition result data is not the same as the pre-stored facial data of an employee, determining that the face recognition result data corresponds to face recognition result data of a customer in a store, and acquiring the face recognition result data. In the present disclosure, the employees include, but are not limited to, couriers, cleaners, security guards, etc.

Optionally, the method further includes:
if the ID of a customer corresponds to one time period during which the customer is photographed, deeming the time period to correspond to one visit of the customer to the store.

A second aspect of the present disclosure provides a customer visit analysis apparatus, comprising:
a data acquisition module, configured to acquire face recognition result data of customers in a store, where the face recognition result data includes IDs of the customers and time periods during which the customers are photographed;
a customer analysis module, configured to cluster the face recognition result data of the customers in the store according to the IDs of the customers, to obtain at least one time period which corresponds to the ID of each customer and during which the customer is photographed;
a data processing module, configured to judge, when the ID of a customer corresponds to a plurality of time periods during which the customer is photographed, whether a time difference between two adjacent time periods among the plurality of time periods during which the customer is photographed is not greater than a staying duration threshold; and determine that the two adjacent time periods correspond to the same visit to the store when the time difference is not greater than the staying duration threshold; and
a visit determination module, configured to determine arrival time and departure time for each visit to the store.

Optionally, the apparatus further includes: a data classification module, configured to cluster face recognition result data of all customers according to stores, to obtain face recognition result data of customers in each store.

Optionally, the data classification module is further configured to: package face recognition result data from an upper-layer service and send the face recognition result data to a message queue; and read and process the face recognition result data from the message queue, before clustering face recognition result data of all customers according to stores.

Optionally, the data classification module is configured to: preprocess face recognition result data after acquiring the face recognition result data from an upper-layer service, the preprocessing including completing data verification, sorting data structures, and compressing data; package and send the preprocessed face recognition result data to a message queue; and save the processed face recognition result data into a time series database according to a preset saving rule.

Optionally, the data processing module includes:
a time mapping module, configured to divide each day into a plurality of consecutive preset time periods and map each of the time periods which correspond to the ID of each customer and during which the customer is photographed to the plurality of consecutive preset time periods;
an aggregation statistics module, configured to determine the minimum time point and the maximum time point corresponding to the ID of the customer in each preset time period; and
a threshold judgment module, configured to judge whether a difference between the minimum time point in a later preset time period and the maximum time point in an earlier preset time period of two adjacent preset time periods, among the preset time periods to which the time periods during which the customer is photographed are mapped, is not greater than the staying duration threshold.

Optionally, the time mapping module is configured to: project, into the consecutive preset time periods, consecutive time points in each of time periods which correspond to the ID of the same customer and during which the customer is photographed, where the length of a time interval between two adjacent preset time periods among the plurality of consecutive preset time periods is equal to the staying duration threshold.

Optionally, the visit determination module is further configured to: determine a staying duration for each visit of the ID of each customer to the store.

Optionally, the face recognition result data includes a date. The visit determination module is further configured to: determine the number of visits and a total staying duration corresponding to the ID of each customer on the date after the arrival time and the departure time are determined for each visit to the store.

A third aspect of the present disclosure provides an electronic device, comprising a processor, a memory, and a bus. The memory stores machine-readable instructions executable by the processor. When the electronic device is in operation, the processor communicates with the memory via the bus, and the machine-readable instructions are executed by the process to execute the method described in the first aspect.

A fourth aspect of the present disclosure provides a storage medium. The storage medium stores a computer program that, when run by a processor, executes the method described in the first aspect.

A fifth aspect of the present disclosure provides a computer program product which, when running on a computer, causes the computer to execute the method described in the first aspect.

Compared with the prior art, a customer visit analysis method, a customer visit analysis apparatus, and a storage medium according to the present disclosure enable analysis of visit behaviors of customers based on face recognition results. Specifically, images in a store are captured by a camera and faces are recognized therefrom to obtain face recognition result data in the store, from which information on visits of customers to the store is analyzed so as to achieve the accurate analysis of the customer visit information, where the customer visit information includes the arrival time of a customer at the store and the departure time of the customer from the store.

In order to enable clearer and easier understanding of the above objects, features, and advantages of the present disclosure, preferred embodiments will be described in detail below by way of example with reference to the accompanying drawings.

### Brief Description of the Drawings

In order to more clearly illustrate technical solutions of embodiments of the present disclosure, drawings required for use in the embodiments will be described briefly below. It is to be understood that the drawings below are merely illustrative of some embodiments of the present disclosure, and therefore should not be considered as limiting its scope. It will be understood by those of ordinary skill in the art that other relevant drawings can also be obtained from these drawings without any inventive effort.
FIG. 1 shows a schematic diagram of an application scenario according to the present disclosure.
FIG. 2 shows a flowchart of a customer visit analysis method according to the present disclosure;
FIG. 3 shows another flowchart of a customer visit analysis method according to the present disclosure; and
FIG. 4 shows a schematic diagram of a customer visit analysis apparatus according to the present disclosure.

### Reference Numerals:

Electronic device-10; memory-11; processor-12; network module-13; customer visit analysis apparatus-14; data acquisition module-100; customer analysis module-101; data processing module-102; visit determination module-103.

### Detailed Description of the Embodiments

The technical solutions of the present disclosure will be described below clearly and completely with reference to the accompanying drawings of the present disclosure. It is apparent that the embodiments to be described are some, but not all of the embodiments of the present disclosure. Generally, the components of the embodiments of the present disclosure, as described and illustrated in the figures herein, may be arranged and designed in a wide variety of different configurations. Thus, the following detailed description of the embodiments of the present disclosure, as represented in the figures, is not intended to limit the scope of the present disclosure as claimed, but is merely representative of selected embodiments of the present disclosure. All the other embodiments obtained by those of ordinary skill in the art in light of the embodiments of the present disclosure without inventive efforts will fall within the scope of the present disclosure as claimed.

It should be noted that similar reference numerals and letters refer to similar items in the following figures, and thus once an item is defined in one figure, it may not be further defined or explained in the following figures.

Some embodiments of the present disclosure will be described below in detail with reference to the accompanying drawings. The following embodiments and the features in the embodiments can be combined with each other without conflict.

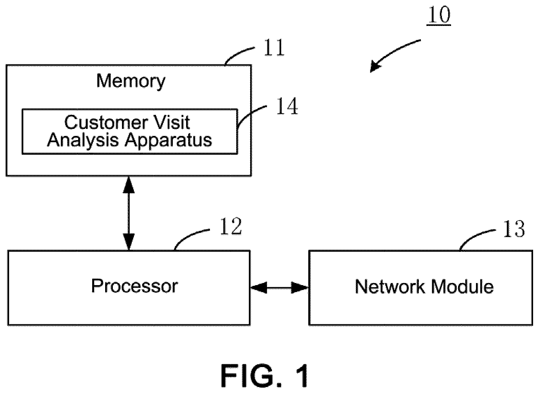

FIG. 1 shows a schematic block diagram of an electronic device 10 according to the present disclosure. The electronic device 10 in the present disclosure may be a device with data processing functions, such as a server, a personal computer, a tablet computer, a smart phone, or the like. As shown in FIG. 1, the electronic device 10 includes a memory 11, a processor 12, a network module 13, and a customer visit analysis apparatus 14.

The memory 11, the processor 12, and the network module 13 are directly or indirectly electrically connected to one another to implement data transmission or interaction. For example, these elements may be electrically connected to each other via one or more communication buses or signal lines. A customer visit analysis apparatus 14 is stored in the memory 11. The customer visit analysis apparatus 14 includes at least one software functional module that can be stored in the memory 11 in the form of software or firmware. The processor 12 executes various functional applications and data processing, namely, implements a data processing method executed by the electronic device 10 in the present disclosure, by running software programs and modules stored in the memory 11, such as the customer visit analysis apparatus 14 in the present disclosure.

Here, the memory 11 may be, but is not limited to, a random access memory (RAM), a read only memory (ROM), a programmable read-only memory (PROM), an erasable programmable read-only memory (EPROM), an electric erasable programmable read-only memory (EEPROM), or the like. Here, the memory 11 is configured to store a program. The processor 12 executes the program after receiving an execution instruction.

The processor 12 may be an integrated circuit chip with data processing capability. The above-mentioned processor 12 may be a general-purpose processor, including a central processing unit (CPU), a network processor (NP), and so on. The methods, steps, and logical block diagrams provided in the present disclosure can be implemented or executed. The general-purpose processor may be a microprocessor, or the processor may be any conventional processor or the like.

The network module 13 is configured to establish a communication connection between the electronic device 10 and an external communication terminal through a network to implement the operations of transmission and reception of network signals and data. The above-mentioned network signals may include wireless signals or wired signals.

It can be understood that the structure shown in FIG. 1 is merely illustrative, and the electronic device 10 may include more or fewer components than those shown in FIG. 1, or have a different configuration from that shown in FIG. 1. The components shown in FIG. 1 may be implemented by hardware, software, or a combination thereof. For example, the electronic device 10 may further include a face recognizer, and the electronic device 10 performs face recognition by means of the face recognizer included therein to obtain face recognition result data. For another example, the processor 12 in the electronic device 10 may be communicatively connected to a face recognizer independent of the electronic device 10 so as to acquire face recognition result data recognized and obtained by the face recognizer.

### First Embodiment

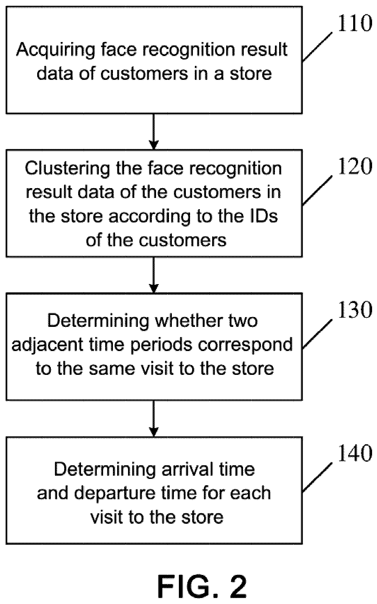

This embodiment provides a customer visit analysis method. Referring to FIG. 2, the method includes the following steps. These steps may be executed by the processor 12 in the electronic device 10 shown in FIG. 1.

In step 110, face recognition result data of customers in a store is acquired.

Taking a certain store or shop as an example, multiple cameras are set in the store, and each camera captures images in the store. In an image, multiple people are walking in the image, and employees and customers are included in the image. The face recognition result data transmitted from the camera in real time includes facial data of employees and facial data of customers. Therefore, if it is desired to acquire face recognition result data of customers, it is necessary to distinguish the face recognition result data of the employees from the face recognition result data of the customers. In one of the implementations, a database containing employee information and facial data corresponding to the employees is established in advance. When real-time face recognition result data is being transmitted, it is judged whether facial data corresponding to the face recognition result data is the same as pre-stored facial data of an employee. If the facial data corresponding to the face recognition result data is the same as the pre-stored facial data of an employee, it is determined that the piece of face recognition result data corresponds to face recognition result data of the employee. If the facial data corresponding to the transmitted face recognition result data is not the same as the pre-stored facial data of an employee, it is determined that the piece of face recognition result data corresponds to face recognition result data of a customer in a store.

The above-mentioned face recognition result data includes an ID (identification number) of a customer and a time period during which the customer is photographed. When there are a plurality of employees and a plurality of customers in an image captured by the camera, each facial data is converted into an ID by a face recognition technology, and the facial data of different people are distinguished by ID so as to facilitate subsequent analysis of a visit behavior of each customer. Multiple cameras are set in the store. Data transmitted from each camera may be a video stream. A time period during which each customer is photographed by the camera can be acquired by recognizing the faces from the video stream image. The video stream may also be understood as a picture stream, and the camera transmits the captured pictures back in real time so that faces are recognized from the pictures. For example, if a customer is captured by the first camera from 9:05 to 9:10, then the time period during which the customer is photographed is from 9:05 to 9:10 in a piece of face recognition result data.

In step 120, the face recognition result data of the customers in the store are clustered according to IDs of the customers.

A piece of face recognition result data includes an ID of a customer and a time period during which the customer is photographed. Of course, other information may also be included. For example, an area where the customer is photographed may also be included. If there are multiple stores, information on a store in which the customer is photographed may be included. When multiple pieces of face recognition result data are transmitted, the multiple pieces of face recognition result data are clustered according to the IDs of customers included in the face recognition result data, and one or more time periods which correspond to the ID of each customer and during which the customer is photographed are obtained, so as to achieve the clustering of the face recognition result data. In general cases, the ID of each customer corresponds to a plurality of time periods during which the customer is photographed. When there is only one camera in the store and the customer is always photographed by the camera, there may be only one time period during which the customer is photographed.

In step 130, it is determined whether two adjacent time periods correspond to the same visit to the store.

If a customer's ID corresponds to only one time period during which the customer is photographed, then this time period is deemed to correspond to one visit of the customer to the store. If a customer's ID corresponds to a plurality of time periods during which the customer is photographed, it is necessary to judge whether a time difference between two adjacent time periods among the plurality of time periods during which the customer is photographed is not greater than a preset staying duration threshold.

For example, for a certain customer, when there is a large area in the store, the customer may be located, within a certain period of time after the customer is photographed, in some blind spots in the store where the face of the customer is not photographed by the camera. Therefore, in the face recognition result data, there may be a certain time gap in a plurality of time periods during which the customer is photographed. For example, if the customer is photographed from 9:05 to 9:10 and the customer is photographed from 9:20 to 9:40, there is a time difference of 10 minutes between the two adjacent time periods. A staying duration threshold of for example 30 minutes corresponding to a customer identity is set in advance. In other words, when there is a time difference of 10 minutes between two adjacent time periods in which the customer is photographed, which is not greater than the preset staying duration threshold of 30 minutes, it is judged that the time periods in the two pieces of data during which the customer is photographed correspond to the same visit to the store.

It should also be noted that, for the same customer, when he/she is purchasing goods in a store, he/she may be photographed by multiple cameras at the same time. For example, the customer is photographed by the first camera from 9:05 to 9:20 and photographed by the second camera from 9:10 to 9:30. This case is also regarded as one visit to the store, because the time periods during which the customer is photographed overlap each other and a time difference therebetween is obviously not greater than the preset staying duration threshold.

In the present disclosure, the staying duration threshold may be flexibly set. For example, different staying duration thresholds may be set for different stores. For example, the staying duration threshold is set according to the area size in each store, and the staying duration threshold set for a store with a larger area may be greater than the staying duration threshold set for a store with a smaller area. For another example, different staying duration thresholds may be set for different customer IDs. For example, historical data is collected and analyzed for individual customers, and the staying duration threshold set for a customer who is analyzed to stay in the store for a longer time may be greater than the staying duration threshold set for a customer who is analyzed to stay in the store for a shorter time. For another example, for different stores and customers, the staying duration threshold may be set at the same fixed duration.

In step 140, arrival time and departure time are determined for each visit to the store.

After each visit of each customer to the store is determined according to step 130, arrival time and departure time for each visit to the store may be determined according to the time period(s) in the face recognition result data during which the customer is photographed, thereby obtaining visit information of each customer in the store.

The visit behaviors of customers can be analyzed for a certain store by the solution described in the above steps 110 to 140. Images in stores are captured by cameras, from which face recognition result data in the stores are obtained, and then visit information of each customer in each store can be analyzed, where the visit information of each customer includes the arrival time of the customer at the store and the departure time of the customer from the store.

However, there are multiple cities across a country, and there may be multiple branch stores in each city. In order to adapt to such a situation with big data and large traffic, before step 110, the method may further include:
clustering face recognition result data of all customers according to stores to obtain face recognition result data of customers in each store.

For example, if a large supermarket chain has multiple stores in various cities across a country, multiple cameras in each store transmit the captured images back, and the faces in the images are recognized. After face recognition result data in all the stores are acquired, face recognition result data of customers in each store is determined according to stores, and the face recognition result data in each store is analyzed respectively. In this way, the analysis efficiency can be effectively increased, and the data analysis time can be reduced.

Optionally, in order to process a large amount of face recognition result data, before clustering the face recognition result data of all customers according to stores, face recognition result data from an upper-layer service should be packaged and sent to a message queue, and the data is read from the message queue to process the face recognition result data. For example, a face recognizer may be integrated into a camera. After the camera captures an image in the store, the face recognizer performs a process of recognizing a face(s) from the image captured by the camera to obtain face recognition result data. The processor 12 of the electronic device 10 includes a message queue for caching the face recognition result data. After the face recognizer obtains the face recognition result data, the obtained face recognition result data is sent to the processor 12, and the processor 12 packages the face recognition result data transmitted from the face recognizer and sends the face recognition result data to the message queue. When processing the face recognition result data, the processor 12 reads and processes the face recognition result data from the message queue in the order of the cache. In this way, a reliable data analysis is ensured.

Since the analysis of customer visits does not require high real-time performance, and it is time-consuming to analyze and calculate a large amount of data, a message queue is introduced into this embodiment as a buffer for data processing. An asynchronous mechanism may also be introduced. For example, a plurality of message queues are introduced, and the respective message queues are processed respectively by using multithreaded asynchronous processing, thereby effectively improving the data processing capability. Especially in the case of large data traffic, big data can be processed by using an asynchronous mechanism in combination with message queues, whereby the data processing load can be effectively reduced. In the present disclosure, each data may be stored in a database. Accordingly, the load for processing data in the database can be effectively reduced by processing the big data using an asynchronous mechanism.

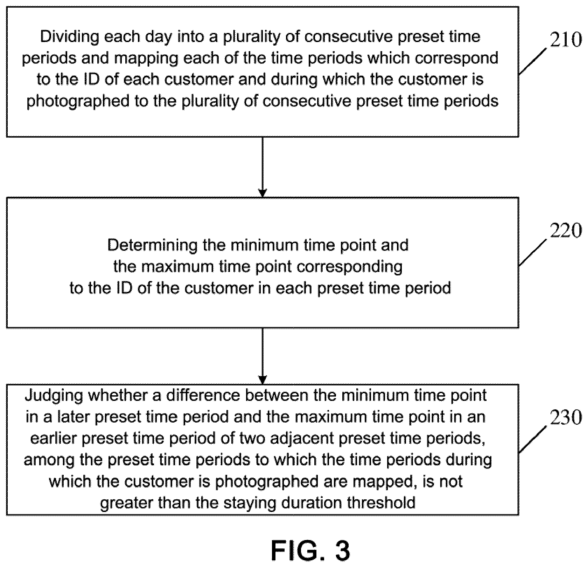

Optionally, in step 130, the step of judging whether a time difference between two adjacent time periods among the plurality of time periods during which the customer is photographed is not greater than a staying duration threshold may be implemented with reference to FIG. 3. A detailed implementation of this step is carried out in the following manner.

In step 210, each day is divided into a plurality of consecutive preset time periods, and each of the time periods which correspond to the ID of each customer and during which the customer is photographed is mapped to the plurality of consecutive preset time periods.

Consecutive time points in each of time periods which correspond to the ID of the same customer and during which the customer is photographed are projected into the consecutive preset time periods. Here, the length of a time interval between two adjacent preset time periods among the plurality of consecutive preset time periods is equal to the staying duration threshold.

In step 220, the minimum time point and the maximum time point corresponding to the ID of the customer in each preset time period are determined.

The minimum time point and the maximum time point among all the consecutive time points in each preset time period are obtained by means of an aggregation function.

In step 230, it is judged whether a difference between the minimum time point in a later preset time period and the maximum time point in an earlier preset time period of two adjacent preset time periods, among the preset time periods to which the time periods during which the customer is photographed are mapped, is not greater than the staying duration threshold.

The minimum time point and the maximum time point in each preset time period corresponding to each time period during which each customer is photographed are analyzed and obtained by the above-mentioned algorithm, and then one visit of the customer to the store is determined by analysis and calculation.

Next, an embodiment of the overall customer visit analysis method under big data and high traffic will be described in further detail.

The processor 12 in the electronic device 10 preprocesses face recognition result data after acquiring the face recognition result data from an upper-layer service. The preprocessing may include completing data verification, sorting data structures, and compressing data. The preprocessed face recognition result data is packaged and sent to a message queue.

The data is read from the message queue, and the read data is post-processed. The post-processing may include decompressing the face recognition result data and sorting data structures. The post-processed face recognition result data is saved into a time series database according to a certain preset saving rule, for example, according to stores or according to photographing areas, and customer visits are analyzed using the data. In the present disclosure, the time series database may be understood to be formed by storing the face recognition result data in the above-mentioned database in chronological order. The time series here mainly means that each piece of data has a time field. Data may be acquired according to certain conditions based on this time field. For example, data may be acquired in order of entry time, or data may be acquired in reverse order of leaving time. The time series database in the present disclosure may refer to the same database as the above-mentioned database. For example, it may be a structured query language (SQL)-type database or a non-relational database NoSQL or the like.

The acquired face recognition result data consists of face recognition result data obtained from images captured by each camera in each photographing area in each of all the stores across a country. From these data, data of different stores is distinguished, and some useless data is filtered. The useless data may include recognized facial data of employees and some fuzzy facial data.

Customer visits are analyzed using the face recognition result data in each store, wherein data analysis conditions are constructed. The data analysis conditions may include fields such as the ID of a customer to be analyzed, the date of data, and a staying duration threshold for the customer. A query aggregation statement is constructed for the time series data according to the data analysis conditions, and a request for query aggregation operation is initiated to the time series database.

For example, if it is desired to analyze a visit behavior of a certain customer's ID on a certain day, the time series database is queried for a plurality of time periods corresponding to the customer's ID during which the customer is photographed on this day, and time points in these time periods are arranged and corresponded to each preset unit time. The length of a unit time interval is equal to the staying duration threshold for the customer included in the data analysis conditions. If the staying duration threshold for the customer is 30 minutes, a day with 24 hours is equally divided by 30 minutes. The minimum time point and the maximum time point in each preset unit time during which the customer is photographed are obtained by an aggregation function.

For instance, when the staying duration threshold is 30 minutes, each preset unit time interval is also 30 minutes. If the customer is photographed by the first camera from 9:05 to 9:20, photographed by the second camera from 9:10 to 9:25, and photographed by the third camera from 9:45 to 9:50, then time points corresponding to these time periods are arranged according to the time.

A period from 9:00 to 9:30 is a preset unit time, and a period from 9:30 to 10:00 is another adjacent preset unit time. An aggregation function is used to obtain the minimum time point at 9:05 and the maximum time point at 9:25 in the period from 9:00 to 9:30 and obtain the minimum time point at 9:45 and the maximum time point at 9:50 in the period from 9:30 to 10:00.

After the minimum time point and the maximum time point in each preset unit time corresponding to the ID of each customer are determined by aggregation statistics, it is judged whether a difference between the minimum time point in the later preset unit time and the maximum time point in the earlier preset unit time is not greater than the preset staying duration threshold. If not greater, for example, if a difference of 20 minutes between 9:45 and 9:25 is not greater than a staying duration threshold of 30 minutes, one visit of the customer is determined, and the arrival time and the departure time are determined for this visit. In other words, the customer in the above example is determined to arrive at the store at 9:05 and leave the store at 9:50. If the difference is greater than the preset staying duration threshold, another visit is determined.

After the arrival time and the departure time are determined for each customer, the data is further analyzed and calculated to determine the staying duration for each visit. When the customer has visited the store multiple times, the number of visits of the customer and the total staying duration of the customer on this day are obtained.

The visit behavior of each of customers in different stores can be analyzed by the above-mentioned process. A photographing area may be added to the above-mentioned data analysis conditions, so that visit behaviors of customers in each area can be analyzed according to areas, such as a fresh food area, a clothing area, a living area, etc.

After the analysis and calculation are completed, the staying duration of each visit, the number of visits, and the total staying duration on the day can be obtained for each customer. Further, it is also possible to obtain the total number of visits per week, per month, and per year, the staying duration of each visit, and the total staying duration for each customer according to the data analyzed daily.

The data obtained in the entire analysis process are integrated. For example, data such as a customer's ID, store, photographing area, date, the arrival time, departure time, staying duration threshold, and staying duration for each visit, the number of visits, and the total staying duration are integrated. These data are saved into a database according to a preset saving condition, for example, according to stores and areas.

The visit records of each customer can be effectively analyzed using the facially recognized data by the above-mentioned steps, and the entire data processing process is suitable for scenarios with large traffic and big data and is highly available.

### Second Embodiment

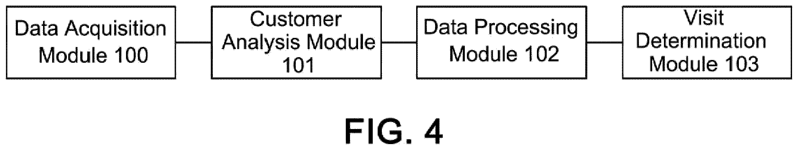

This embodiment provides a customer visit analysis apparatus. Referring to FIG. 4, the apparatus includes following modules.

The data acquisition module 100 is configured to acquire face recognition result data of customers in a store, where the face recognition result data includes IDs of the customers and time periods during which the customers are photographed.

The data acquisition module 100 may be specifically implemented with reference to the related description of step S110 in FIG. 2, therefore a detailed description is omitted here.

The customer analysis module 101 is configured to cluster the face recognition result data of the customers in the store according to the IDs of the customers to obtain at least one time period which corresponds to the ID of each customer and during which the customer is photographed.

The customer analysis module 101 may be specifically implemented with reference to the related description of step S120 in FIG. 2, therefore a detailed description is omitted here.

The data processing module 102 is configured to judge, when the ID of a customer corresponds to a plurality of time periods during which the customer is photographed, whether a time difference between two adjacent time periods among the plurality of time periods during which the customer is photographed is not greater than a staying duration threshold; and determine that the two adjacent time periods correspond to the same visit to the store when the time difference is not greater than the staying duration threshold.

The data processing module 102 may be specifically implemented with reference to the related description of step S130 in FIG. 2, therefore a detailed description is omitted here.

The visit determination module 103 is configured to determine arrival time and departure time for each visit to the store.

The visit determination module 103 may be specifically implemented with reference to the related description of step S140 in FIG. 2, therefore a detailed description is omitted here.

Optionally, the apparatus further includes: a data classification module configured to cluster face recognition result data of all customers according to stores to obtain face recognition result data of customers in each store.

Optionally, the data classification module is further configured to: package face recognition result data from an upper-layer service and send the face recognition result data to a message queue; and read and process the face recognition result data from the message queue, before clustering face recognition result data of all customers according to stores.

Optionally, the data classification module is further configured to: preprocess face recognition result data after acquiring the face recognition result data from an upper-layer service, the preprocessing including completing data verification, sorting data structures, and compressing data; package and send the preprocessed face recognition result data to a message queue; and save the processed face recognition result data into a time series database according to a preset saving rule.

Optionally, the data processing module includes: a time mapping module, configured to divide each day into a plurality of consecutive preset time periods and map each of the time periods which correspond to the ID of each customer and during which the customer is photographed to the plurality of consecutive preset time periods; an aggregation statistics module, configured to determine the minimum time point and the maximum time point corresponding to the ID of the customer in each preset time period; and a threshold judgment module, configured to judge whether a difference between the minimum time point in a later preset time period and the maximum time point in an earlier preset time period of two adjacent preset time periods, among the preset time periods to which the time periods during which the customer is photographed are mapped, is not greater than the staying duration threshold.

Optionally, the time mapping module is configured to: project, into the consecutive preset time periods, consecutive time points in each of time periods which correspond to the ID of the same customer and during which the customer is photographed, where the length of a time interval between two adjacent preset time periods among the plurality of consecutive preset time periods is equal to the staying duration threshold.

Optionally, the visit determination module 103 is further configured to: determine a staying duration for each visit of the ID of each customer to the store.

Optionally, the face recognition result data includes a date. The visit determination module 103 is further configured to: determine the number of visits and a total staying duration corresponding to the ID of each customer on the date after the arrival time and the departure time are determined for each visit to the store.

It will be clearly appreciated by those skilled in the art that, for the convenience and brevity of the description, the specific operating process of the apparatus described above may be performed with reference to the corresponding process in the foregoing method and will not be described in detail here.

The present disclosure further provides an electronic device, comprising a processor, a memory, and a bus. The memory stores machine-readable instructions executable by the processor. When the electronic device is in operation, the processor communicates with the memory via the bus, and the machine-readable instructions are executed by the process to execute the method described in the first embodiment.

The present disclosure further provides a storage medium. The storage medium stores a computer program that, when run by a processor, executes the method described in the first embodiment.

The present disclosure further provides a computer program product which, when running on a computer, causes the computer to execute the method described in the first embodiment.

In the embodiments according to the present disclosure, it should be understood that the disclosed apparatus and method may also be implemented in other ways. The embodiments of the apparatus described above are merely illustrative in nature. For example, the flow charts and block diagrams in the figures illustrate implementable architectures, functionalities, and operations of apparatuses, methods, and computer program products according to multiple embodiments of the present disclosure. In this regard, each block in the flow charts or block diagrams may represent a module, a program segment, or a portion of code, wherein the module, the program segment, or the portion of code includes one or more executable instructions for implementing specified logical function(s). It should also be noted that in some alternative implementations, the functions noted in the blocks may occur out of the order noted in the figures. For example, two blocks shown in succession may in fact be executed substantially concurrently, or they may sometimes be executed in a reverse order, depending upon the functionality involved. It will also be noted that each block of the block diagrams and/or flow charts, and combinations of blocks in the block diagrams and/or flow charts, may be implemented by special purpose hardware-based systems that execute the specified functions or actions, or by a combination of special purpose hardware and computer instructions.

Besides, the individual functional modules in the embodiments of the present disclosure may be integrated together to form an independent part, or each of the modules may be physically stand-alone, or two or more of the modules may be integrated into an independent part.

When implemented in the form of a software functional module and sold or used as an independent product, the functions may be stored in a computer-readable storage medium. Based on such understanding, a technical solution of the present disclosure essentially, or the part thereof contributing to the prior art, or a part of the technical solution may be embodied in the form of a software product. The computer software product is stored in a storage medium, and includes a number of instructions for causing a computer device (which may be a personal computer, a server, a network device, or the like) to execute all or some of the steps of the methods described in the various embodiments of the present disclosure. The preceding storage medium includes any medium that can store program codes, such as a USB flash disk, a mobile hard disk, a read-only memory (ROM), a random access memory (RAM), a magnetic disk, or an optical disk. It should be noted that in this text, relationship terms such as first, second, and the like are used only for distinguishing one entity or operation from another entity or operation, while it is not necessarily required or implied that these entities or operations have any such practical relationship or order. Furthermore, the terms "comprise", "include", or any variations thereof are intended to cover non-exclusive inclusions, such that a process, method, article, or apparatus that comprises a list of elements not only comprises those elements, but also comprises other elements not expressly listed or also comprises elements inherent to such process, method, article, or apparatus. Without more restrictions, an element defined with the wording "comprising a..." does not exclude the presence of additional identical elements in the process, method, article, or apparatus comprising said element.

The above description is merely illustrative of preferred embodiments of the present disclosure and is not intended to limit the present disclosure. It will be understood by those skilled in the art that various modifications and variations may be made to the present disclosure. Any modifications, equivalent alternatives, improvements and so on made within the spirit and principle of the present disclosure are intended to be encompassed within the scope of protection of the present disclosure.

### Industrial Applicability

A customer visit analysis method, a customer visit analysis apparatus, and a storage medium according to the present disclosure enable analysis of visit behaviors of customers based on face recognition results, whereby information on visits of customers to a store is analyzed so as to achieve the accurate analysis of the customer visit information, where the customer visit information includes the arrival time of a customer at the store and the departure time of the customer from the store.

## Claims

1. A customer visit analysis method, **characterized by** comprising:
acquiring face recognition result data of customers in a store, wherein the face recognition result data comprises IDs of the customers and time periods during which the customers are photographed;
clustering the face recognition result data of the customers in the store according to the IDs of the customers, to obtain at least one time period which corresponds to an ID of each of the customers and during which the one customer is photographed;
judging, if the ID of the one customer corresponds to a plurality of time periods during which the one customer is photographed, whether a time difference between two adjacent time periods among the plurality of time periods during which the one customer is photographed is not greater than a staying duration threshold, wherein if not greater, it is determined that the two adjacent time periods correspond to a same visit to the store; and
determining an arrival time and a departure time for each visit to the store.

2. The customer visit analysis method according to claim 1, further comprising, before the acquiring face recognition result data of customers in a store,
clustering face recognition result data of all customers according to stores, to obtain face recognition result data of customers in each store.

3. The customer visit analysis method according to claim 2, further comprising, before clustering face recognition result data of all customers according to stores, packaging face recognition result data transmitted from an upper-layer service and sending the face recognition result data to a message queue; and
reading and processing the face recognition result data from the message queue.

4. The customer visit analysis method according to claim 3, wherein the packaging face recognition result data transmitted from an upper-layer service and sending the face recognition result data to a message queue comprises:
preprocessing the face recognition result data after acquiring the face recognition result data transmitted from the upper-layer service, wherein the preprocessing comprises completing data verification, sorting data structures, and compressing data; and
packaging and sending preprocessed face recognition result data to a message queue; and
the reading and processing the face recognition result data from the message queue comprises: decompressing the face recognition result data and sorting data structures; and
saving processed face recognition result data into a time series database according to a preset saving rule.

5. The customer visit analysis method according to any one of claims 1 to 4, wherein the judging whether a time difference between two adjacent time periods among the plurality of time periods during which the one customer is photographed is not greater than a staying duration threshold comprises:
dividing each day into a plurality of consecutive preset time periods and mapping each of the time periods which correspond to the ID of each of the customers and
during which the one customer is photographed to the plurality of consecutive preset time periods;
determining a minimum time point and a maximum time point corresponding to the ID of the one customer in each preset time period; and
judging whether a difference between the minimum time point in a later preset time period and the maximum time point in an earlier preset time period in two adjacent preset time periods, among preset time periods to which the time periods during which the one customer is photographed are mapped, is not greater than the staying duration threshold.

6. The customer visit analysis method according to claim 5, wherein the dividing each day into a plurality of consecutive preset time periods and mapping each of the time periods which correspond to the ID of each of the customers and during which the one customer is photographed to the plurality of consecutive preset time periods comprises:
projecting, into the consecutive preset time periods, consecutive time points in each of time periods which correspond to an ID of the same customer and during which the one customer is photographed, wherein a length of a time interval between two adjacent preset time periods among the plurality of consecutive preset time periods is equal to the staying duration threshold.

7. The customer visit analysis method according to any one of claims 1 to 6, further comprising, after the determining an arrival time and a departure time for each visit to the store,
determining a staying duration for each visit of an ID of each customer to the store.

8. The customer visit analysis method according to claim 7, wherein the face recognition result data comprises a date, and the method further comprises, after the determining an arrival time and a departure time for each visit to the store, determining a number of visits and a total staying duration corresponding to the ID of each customer on the date.

9. The customer visit analysis method according to claim 8, wherein the face recognition result data further comprises a photographing area where a customer is photographed, and the method further comprises:
integrating and saving, into a database, at least one of the arrival time, the departure time, the staying duration, the total staying duration, and the number of visits corresponding to the ID of each customer according to a preset saving condition, wherein the preset saving condition comprises a store and/or a photographing area.

10. The customer visit analysis method according to any one of claims 1 to 9, wherein the acquiring face recognition result data of customers in a store comprises:
judging, when real-time face recognition result data is being transmitted, whether facial data corresponding to the face recognition result data is the same as pre-stored facial data of an employee, wherein
if the facial data corresponding to the face recognition result data is the same as the pre-stored facial data of the employee, it is determined that the face recognition result data corresponds to face recognition result data of the employee; and
if the facial data corresponding to the face recognition result data is not the same as the pre-stored facial data of the employee, it is determined that the face recognition result data corresponds to face recognition result data of a customer in the store; and
acquiring the face recognition result data.

11. The customer visit analysis method according to any one of claims 1 to 10, further comprising:
regarding, if an ID of a customer corresponds to one time period during which the customer is photographed, the time period as corresponding to one visit of the customer to the store.

12. A customer visit analysis apparatus, **characterized by** comprising:
a data acquisition module, configured to acquire face recognition result data of customers in a store, wherein the face recognition result data comprises IDs of the customers and time periods during which the customers are photographed;
a customer analysis module, configured to cluster the face recognition result data of the customers in the store according to the IDs of the customers, to obtain at least one time period which corresponds to an ID of each of the customers and during which the one customer is photographed;
a data processing module, configured to judge, when an ID of a customer corresponds to a plurality of time periods during which the customer is photographed, whether a time difference between two adjacent time periods among the plurality of time periods during which the customer is photographed is not greater than a staying duration threshold; and determine that the two adjacent time periods correspond to the same visit to the store, when the time difference is not greater than the staying duration threshold; and
a visit determination module, configured to determine an arrival time and a departure time for each visit to the store.

13. The customer visit analysis apparatus according to claim 12, further comprising:
a data classification module, configured to cluster face recognition result data of all customers according to stores, to obtain face recognition result data of customers in each store.

14. The customer visit analysis apparatus according to claim 13, wherein the data classification module is further configured to: package face recognition result data transmitted from an upper-layer service and send the face recognition result data to a message queue; and read and process the face recognition result data from the message queue, before clustering the face recognition result data of all customers according to the stores.

15. The customer visit analysis apparatus according to claim 14, wherein the data classification module is further configured to: preprocess the face recognition result data after acquiring the face recognition result data transmitted from the upper-layer service, wherein the preprocessing comprises completing data verification, sorting data structures, and compressing data; package and send preprocessed face recognition result data to a message queue; and save processed face recognition result data into a time series database according to a preset saving rule.

16. The customer visit analysis apparatus according to any one of claims 12 to 15, wherein the data processing module comprises:
a time mapping module, configured to divide each day into a plurality of consecutive preset time periods and map each of the time periods which correspond to the ID of each customer and during which the one customer is photographed to the plurality of consecutive preset time periods;
an aggregation statistics module, configured to determine a minimum time point and a maximum time point corresponding to the ID of the one customer in each preset time period; and
a threshold judgment module, configured to judge whether a difference between the minimum time point in a later preset time period and the maximum time point in an earlier preset time period in two adjacent preset time periods is not greater than the staying duration threshold, with the two adjacent preset time periods being among preset time periods to which the time periods during which the one customer is photographed are mapped.

17. The customer visit analysis apparatus according to claim 16, wherein the time mapping module is configured to: project, into the consecutive preset time periods, consecutive time points in each of time periods which correspond to an ID of the same customer and during which the one customer is photographed, wherein a length of a time interval between two adjacent preset time periods among the plurality of consecutive preset time periods is equal to the staying duration threshold.

18. The customer visit analysis apparatus according to any one of claims 12 to 17, wherein the visit determination module is further configured to: determine a staying duration for each visit of the ID of each customer to the store.

19. The customer visit analysis apparatus according to claim 18, wherein the face recognition result data comprises a date, and the visit determination module is further configured to: determine the number of visits and a total staying duration corresponding to the ID of each customer on the date after the arrival time and the departure time are determined for each visit to the store.

20. A storage medium, **characterized by** storing a computer program, wherein the computer program, when run by a process, executes the method according to any one of claims 1 to 11.
